# EUROPEAN PATENT APPLICATION

(11) **EP 1 321 448 A1**
(43) Date of publication of application: **25.06.2003**
(21) Application number: 01870291.0
(22) Date of filing: 21.12.2001
(51) Int. Cl.: C04B 41/00

(54) **Method for reversibly changing the hydrophilic properties of a ceramic oxide or an oxidic ceramic**

(71) Applicant: "VLAAMSE INSTELLING VOOR TECHNOLOGISCH ONDERZOEK", afgekort "V.I.T.O.", 2400 Mol (BE)
(72) Inventor: Van De Leest, René, 2350 Vosselaar (BE)
(74) Representative: Vandersteen, Pieter

(57) **Abstract**

The present invention is related to a method for reversibly increasing the contact angle for water on a ceramic oxide or an oxidic ceramic surface, characterised in that the method comprises the step of introducing a surface defect in said surface.

## Description

### Field of the invention

The present invention is related to a method for reversibly changing the hydrophilic properties of a ceramic oxide or an oxidic ceramic.

The present invention is also related to a number of applications, such as a method for reversible lithographic printing using ceramics.

### State of the art

Ceramic oxides and oxidic ceramics are known materials, which are useful in numerous applications, such as a substrate for supporting electrical circuits (e.g. in semiconductor production), such as membranes or filters in a wide range of dimensions, and for artefacts resistant to high wear and temperature.

Some of the more interesting properties of ceramic materials include their hardness and their heat resistance and thermal conductivity, which makes ceramic oxides and oxidic ceramics especially useful in applications with high but specific material requirements.

Ceramic oxides and oxidic ceramics can be defined as solid compounds which are usually made by sintering particles (powder) together at high temperatures to form a dense, hard and durable material. Ceramics can therefore be characterised by their specific mechanical and/or functional properties.

An example of such an application is lithographic printing. Lithographic printing plates are used for digital offset press applications. The process from electronic information to printing is also described as computer-to-plate printing.

At the moment the two main types of lithographic printing plates are light-sensitive imaging plates and thermal plates. The substrate for the plates is usually anodised aluminium. These types of plates can only be used once.

A process devised by Kodak is described in a series of patent applications. US 5743189 (zirconia (ZrO2)), US 5543269 (doped zirconia), US 5836249 (zirconia-alumina composite material) describe materials suitable for printing plates or cylinders.

US 5893328 discloses reusable printing material (a composite of zirconia alloy and α-alumina) that can be used to high-energy irradiation to cause localised "melting" of alloy in the exposed areas, thereby creating oleophilic surfaces. The mechanism for the conversion between hydrophilic and oleophilic is not clear: in US 5836249 it is disclosed that local ablation and formation of substoichiometric zirconia is responsible for the conversion to oleophilic surfaces while in US 5893328 it is disclosed for exactly the same experimental conditions that local melting is the cause for oleophilic behaviour.

For image formation, the prior art discloses the following methods:
- laser irradiation with a Nd-YAG laser at λ = 1064 nm, or
- High power / high fluence irradiation: the average power is 1 W to 50 W and the peak power lies between 6 kW and 100 kW.

The high laser power output takes the irradiation effects into the "thermal" region where melting or decomposition might occur, thus making this process not a truly reversible process.

For image erasure, the following methods have been suggested:
- laser irradiation with an Ar-laser (X= 488 nm) or with a CO2-laser (λ = 10.6 µm).
- heating at T = 500°C or higher in an oxygen-containing atmosphere.

Preferred materials used in the prior art process comprise zirconia-alumina ceramic composites with a zirconia content from 50% to 99.9%. Other materials named are: zirconia, alumina, zirconia composites (with MgO, CaO, Y₂O₃, Sc₂O₃ and rare earth oxides), aluminium-magnesium silicate, magnesium silicate and silicon carbide. Monolithic ceramics as well as ceramic layers are described. The porosity of the ceramic materials must be between 0.1% and 2%. The grain size should lie between 0.2 µm and 1 µm.

The prior art process is thus essentially a thermal process. Further, it relies on massive light doses to melt or decompose the surface. This makes the prior art process slow.

The prior art process is also restricted to only a few ceramic materials. The intense local heating of the ceramic induces local sintering which impairs the process reversibility. Therefore the prior art process is limited to ceramic materials with inhibited grain growth such as zirconia toughened alumina.

The prior art process also yields surface damage through local melting or decomposition which leads to rather irreversible surface morphology changes. Therefore, it is not really a reversible process.

A method for truly reversibly changing the hydrophilic properties of a ceramic oxide or an oxidic ceramic is thus not yet disclosed in the prior art.

### Aims of the invention

The present invention aims to provide a method for truly reversibly changing the hydrophilic properties of a ceramic oxide or an oxidic ceramic.

In a specific embodiment of the present invention, the present invention aims to provide a method for lithographic printing using reversibly imprinted printing plates.

A further aim of the present invention is to provide a base for the next generation digital offset printing technology based on a reversible switching between hydrophilic and oleophilic surfaces of ceramic materials.

### Summary of the invention

The present invention concerns mainly a method for reversibly increasing the contact angle for water on a ceramic oxide or an oxidic ceramic surface, characterised in that the method comprises the step of introducing a surface defect in said surface. Said step of introducing a surface defect comprises preferably a step selected from the group consisting of UV radiation with a wavelength between 200nm and 400nm and heating under low partial oxygen pressure. Advantageously, the method of the invention is executed under low partial oxygen pressure or in a reducing atmosphere. In case UV radiation is used, suitable light can be readily obtained with a low-pressure mercury lamp. In case heating under low partial oxygen pressure is used, it is preferably performed at a temperature of about 200°C or higher. Said heating under low partial oxygen pressure can be performed using a diode laser at low fluence.

In the method of the invention, the resulting contact angle for water is preferably higher than 20°, advantageously higher than 40°.

Another aspect of the present invention concerns a method for reversibly reducing the contact angle for water on a ceramic oxide or an oxidic ceramic surface obtainable by the method of the invention, characterised in that the method comprises the step of heating the surface in an oxidising atmosphere. Said oxidising atmosphere is preferably air. Said heating is preferably performed at about 200°C or higher.

The ceramic oxide or oxidic ceramic for use in the method according to the present invention is preferably selected from the group consisting of alumina, zirconia and anodised aluminium.

In another aspect of the present invention, the use of the method of the invention for creating oleophilic images on a hydrophilic surface or vice versa, e.g. for lithographic printing purposes is disclosed.

Yet another aspect of the present invention concerns a method for treating a ceramic oxide or an oxidic ceramic substrate having a surface, comprising the step of introducing a surface defect on said surface, thereby reversibly increasing the contact angle for water.

Another aspect of the present invention relates to a method for lithographic printing, comprising the steps of:
- Providing a ceramic oxide or an oxidic ceramic with a hydrophilic surface,
- Creating an oleophilic image on said hydrophilic surface by locally applying any of the above-mentioned methods, to obtain a printing image, and
- Apply ink to said printing image and transfer the image to a support such as paper.

### Short description of the drawings

Figure 1 shows the creation and annihilation of a surface defect according to the present invention.

Figure 2 represents a preferred embodiment of the present invention.

Figure 3 describes a lithographic printing process according to the present invention.

### Detailed description of the invention

A hydrophilic surface is characterised by a contact angle equal to zero for water, while for an oleophilic surface the contact angle for water is greater than zero.

The reversible hydrophilic - oleophilic transition is created by changing the defect structure of the ceramic surface. Surface defects at ceramic surfaces can be created by physicochemical processes such as UV-irradiation or laser irradiation at low partial oxygen pressure. Surface defects at ceramic surfaces can be annihilated by heating under large partial oxygen pressure.

In general ceramic oxides or oxidic ceramics can be used to practise the present invention. These materials must satisfy certain criteria, which can be described as:

### General requirements

The material should be electrically isolating i.e. defects, charge carriers should not diffuse and give rise to recombinations. Further, the bandgap must be greater than the formation enthalpy for oxygen vacancies (or the irradiation energy should be smaller than the bandgap)
- Submicron grain size
- Surface roughness
- Impurities: 'native impurities' such as Na, Ca, ... should be kept as low as possible while controlled introduction of impurities (doping) can be used to improve the properties of the surface.
- Porosity: preferably, dense ceramic material with densities ranging from 96% to 99% are used.

### Materials description

Monolithic oxide ceramics such as alumina, zirconia, ... can be used to practise the present invention. Also oxidic ceramic composites, grain boundary modified oxidic ceramics and ceramic layers on a substrate can be used. Said substrate can be selected from ceramics, glasses, metals and semiconductors or the like. Deposition methods include sol-gel, PVD, CVD, Plasma-based deposition and/or Laser-based deposition

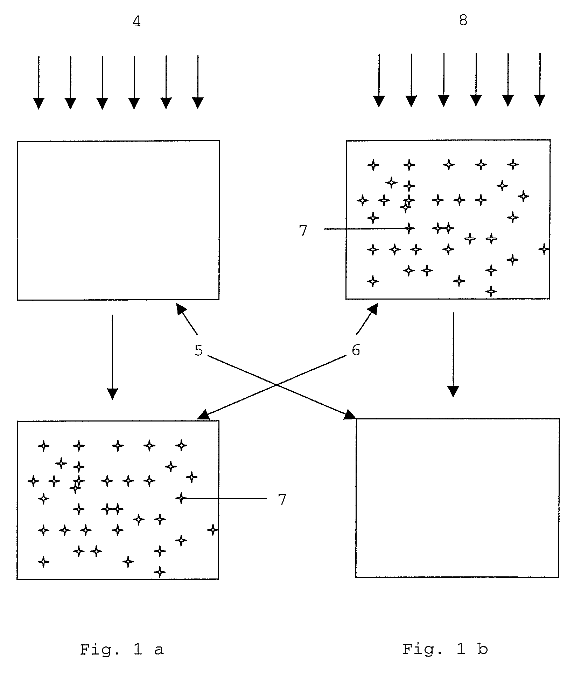

The general principles of the method according to the invention can be seen on figures 1 a and b.

A hydrophilic ceramic surface 5 (contact angle for water: 0°) for oxidic ceramics can be generated by heating 8 the ceramic material or surface in an oxygen-containing atmosphere such as air at a temperature of T=200°C or higher.

Generation of an oleophilic surface 6 is done by creating an oleophilic ceramic surface (contact angle for water >0°), by creating surface crystal imperfections 7 such as oxygen vacancies. The formation enthalpy of oxygen vacancies lies in the range 2 - 5 eV. Surface defects in oxidic ceramics are created by physicochemical processes 4 such as:

### UV-irradiation:

U.V. radiation with a wavelength λ between 200 and 350 nm is particularly suited to create surface defects according to the present invention. A low oxygen partial pressure is preferred in order to avoid ozone production. For example, a low-pressure mercury lamp (λ= 254 nm/15mW, λ = 185 nm/1.5 mW) can be used to create an oleophilic surface.

Irradiation with a xenon dimmer excimer lamp (λ = 172 nm) did not produce an oleophilic surface. Defect creation occurs below the surface and the light energy is greater than the bandgap of many oxides so that charge carriers are created and recombination effects eliminate excess electrical charges.

### Heating under low partial oxygen pressure

Heating under partial oxygen pressure shifts the defect equilibrium to the region where oxygen vacancies are the predominant defect species. Therefore it can also be used to practise the present invention. A low partial oxygen pressure can be created by using a flow of inert gases such as nitrogen and argon.... A better way even is to create a reducing atmosphere by adding a reducible gas such as hydrogen.

The heating is preferentially done with a diode laser and can be done at low fluence because heating at T=200°C is already sufficient to create oxygen vacancies under low partial oxygen pressure. Clearly, the process according to this embodiment of the present invention does not provoke any local sintering or melting.

### Example 1: Lithographic printing using reversibly imprinted printing plates

The reversible conversion hydrophilic /oleophilic at the surface of ceramic materials forms the basis for the printing process. Ink is retained at oleophilic surfaces and is rejected at hydrophilic surfaces. Image formation occurs by turning the surface oleophilic and image erasure is effectuated by turning the surface hydrophilic.

Image erasure (generation of a hydrophilic surface) according to the present invention can be done by annihilation of surface defects such as oxygen vacancies by reaction with oxygen.

Image formation (generation of an oleophilic surface) is done by creating surface crystal imperfections such as oxygen vacancies.

### 1. Contact angle measurements

### 1.1 water on alumina (Al₂O₃) ceramics

α-alumina powder CT3000SG (Alcoa) is pressed, sintered and polished to form a ceramic artefact.
a. Creating a hydrophilic surface:
   - Heating at T=250°C, during 1 hour, open to the air.
   - Resulting contact angle for water = 0°
b. Creating an oleophilic surface:
   b.1.: using a hydrogen atmosphere
      - Heating at T=250°C, during 1 hour, in a hydrogen atmosphere.
      - Resulting contact angle for water = 74.2°
   b.2.: using a nitrogen atmosphere
      - Heating at T=250°C, during 1 hour, in a nitrogen atmosphere.
      - Resulting contact angle for water = 61.4°
   b.3 using UV irradiation
      - Irradiate with UV light (λ= 254 nm), T=200°C, during 1 hour.
      - Resulting contact angle for water = 45.4°

### 1.2 anodised aluminium

a. Creating a hydrophilic surface:
   - Irradiate with UV light (λ= 254 nm)
   - Resulting contact angle for water = 0°
b. Creating an oleophilic surface:
   b.1: using a hydrogen atmosphere
      - Heating at T=250°C, during 1 hour, in a hydrogen atmosphere.
      - Resulting contact angle for water = 135.6°
   b.2.: using a nitrogen atmosphere
      - Heating at T=250°C, during 1 hour, in a nitrogen atmosphere.
      - Resulting contact angle for water = 65.6°

### 2. Ink retaining of selectively treated surfaces

### 2.1 α-alumina ceramics

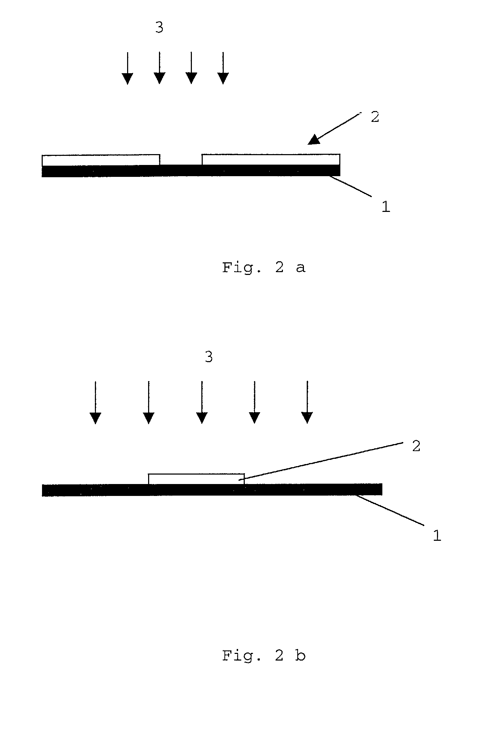

The surface of the alumina artefact 1 is selectively illuminated with UV irradiation 3 via a mask 2 (see figure 2 a and 2 b).
The irradiated surface is hydrophobic and the nonirradiated surface stays hydrophilic.

### 2.2 anodised aluminium

Selective heating/irradiation is used. The surface of the anodised aluminium is selectively illuminated with UV irradiation via a mask.
The irradiated surface is hydrophobic and the nonirradiated surface stays hydrophilic.

### 2.3 Application of ink pattern on the materials of 2.1 and 2.2.

The complete surface is sponged with water. The hydrophilic surfaces retain the water, creating a homogeneous water layer.

Printing ink is then applied to the sponge and again the complete surface is sponged. The hydrophobic surfaces retain the ink, while on the hydrophilic part of the surface, no ink is withheld.

The ink pattern can then be transferred to a rubber stamp, which can be used to print the pattern e.g. on paper.

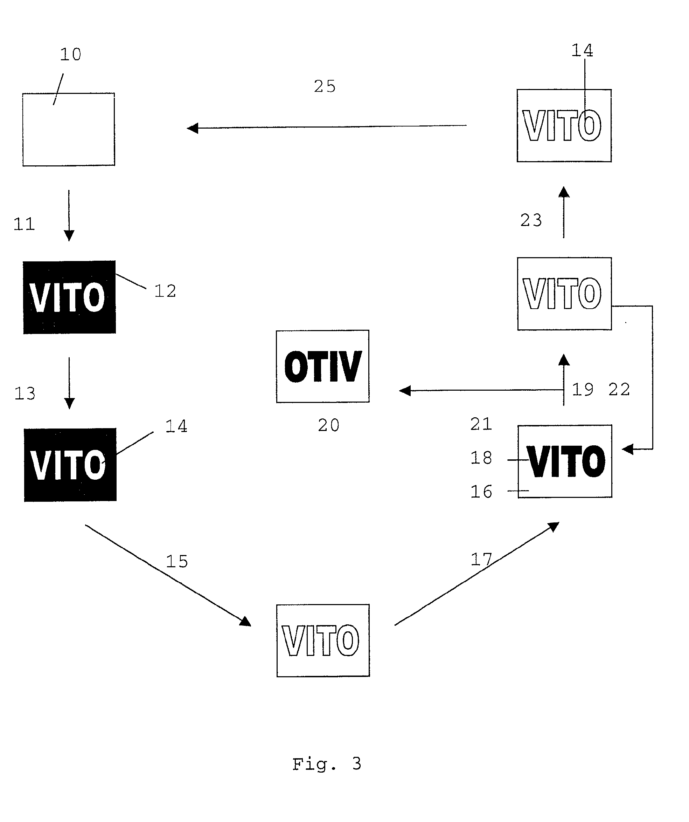

The reversible lithographic printing process according to a preferred embodiment of the present invention is summarised in figure 3.

A ceramic surface 10 substantially without surface defects is covered with a mask 12 (11). The surface is then treated (13) with the method for creating surface deficiencies according to the invention, such as irradiation with UV light (λ= 254 nm) at T=200°C, yielding an oleophilic surface where no mask covered the surface (14). Removal of the mask yields a ready-to-use lithographic printing plate. When sponging (17) with an ink solution, the oleophilic surface 14 will retain the ink, whereas the hydrophilic surface 16 will not. This creates an ink-loaded surface 18. Transfer of the ink to a rubber stamp (or directly to a support surface) (19,21) yields an ink-loaded rubber stamp 20 which can be used to print on the usual support (e.g. paper). The printing plate can be reloaded with ink (22) and reused to print the same pattern. If no more identical prints are needed, the printing plate is cleaned (23) and can be regenerated (25) to a completely hydrophilic surface by the method of the invention (e.g. by heating at T=250°C, during 1 hour, open to the air). The printing plate can now be reused.

It is clear that other uses of the product of the invention can be realised. The invention can readily be applied to the creation of electrical circuits (and transistor-like structures) on ceramic substrates, orientation of liquid crystals in LCD's, self-assembly and self-alignment of structures via amphotereous molecules, ceramic membranes (filtration of water or organic materials), power cell electrodes (hydrophobic on the gas side and hydrophilic on the fluid side), pretreatment of ceramic surfaces to improve assembly of identical or different materials to each other, the creation of supports for biological molecules for detection purposes (such as biochips) , ... .

## Claims

1. Method for reversibly increasing the contact angle for water on a ceramic oxide or an oxidic ceramic surface, **characterised in that** the method comprises the step of introducing a surface defect in said surface.

2. Method as in claim 1, wherein said step of introducing a surface defect comprises a step selected from the group consisting of UV radiation with a wavelength between 200nm and 400nm and heating under low partial oxygen pressure.

3. Method as in claim 1 or 2, wherein the method is executed under low partial oxygen pressure or in a reducing atmosphere.

4. Method as in claim 2 or 3, wherein said UV radiation is performed with a low-pressure mercury lamp.

5. Method as in claim 2 or 3, wherein said heating under low partial oxygen pressure is performed at a temperature of about 200°C or higher.

6. Method as in claim 5, wherein said heating under low partial oxygen pressure is performed using a diode laser at low fluence.

7. Method as in any of the claims 1 to 6, wherein the resulting contact angle for water is higher than 20°, preferably higher than 40°.

8. Method for reversibly reducing the contact angle for water on a ceramic oxide or an oxidic ceramic surface obtainable by the method of any of the preceding claims, **characterised in that** the method comprises the step of heating the surface in an oxidising atmosphere.

9. Method as in claim 8, wherein said oxidising atmosphere is air.

10. Method as in claim 8 or 9, wherein said heating is performed at about 200°C or higher.

11. Method as in any of the preceding claims 1 to 10, wherein the ceramic oxide or oxidic ceramic is selected from the group consisting of alumina, zirconia and anodised aluminium.

12. A method for lithographic printing, comprising the steps of:
• Providing a ceramic oxide or an oxidic ceramic with a hydrophilic surface,
• Creating an oleophilic image on said hydrophilic surface by locally applying the method of one of the claims 1 to 7, to obtain a printing image, and
• Apply ink to said printing image and transfer the image to a support such as paper.

13. Use of the method as in any of the preceding claims 1 to 11 for creating oleophilic images on a hydrophilic surface or vice versa.

14. A method for treating a ceramic oxide or an oxidic ceramic substrate having a surface, comprising the step of introducing a surface defect on said surface, thereby reversibly increasing the contact angle for water.
